# EUROPEAN PATENT APPLICATION

(11) **EP 4 203 147 A1**
(43) Date of publication of application: **28.06.2023**
(21) Application number: 22864882.0
(22) Date of filing: 29.07.2022
(51) Int. Cl.: H01M 50/105, H01M 50/129, B29C 65/00, B29C 65/16, B29L 31/00

(54) **POUCH TYPE CELL AND METHOD FOR MOLDING SEALING PART THEREOF**

(30) Priority: 31.08.2021 KR 20210115787; 28.07.2022 KR 20220093598
(71) Applicant: LG Energy Solution, Ltd., Seoul 07335 (KR)
(72) Inventor: AHN, Chang Bum, Daejeon 34122 (KR); MOON, Jongmin, Daejeon 34122 (KR); HWANG, Jin Ha, Daejeon 34122 (KR)
(74) Representative: Plasseraud IP
(86) International application number: PCT/KR2022/011195
(87) International publication number: WO 2023/033374

(57) **Abstract**

Disclosure is a pouch-type cell in which a full width of a pouch cell is evenly maintained from an upper end to a lower end by completely fixing a sealing part of the pouch cell through molding using infrared heating, even without the use of tape, and a method for molding a sealing part thereof. The pouch-type cell includes an electrode assembly housing part; and sealing parts positioned at both side ends of the electrode assembly housing part, respectively, and protruding in an outward direction, in which the sealing parts include a portion overlapped by folding a tip, and the overlapped portions of the sealing parts form a constant angle in a range of is 80 to 90 degrees with a sealing part portion except the overlapped portion without the help of an external force.

## Description

### [Technical Field]

The present application claims the benefit of priority based on Korean Patent Application Nos. 10-2021-0115787 filed on August 31, 2021, and 10-2022-0093598 filed on July 28, 2022, the entire contents of which are incorporated herein by reference.

The present invention relates to a pouch-type cell and a method for molding a sealing part thereof, and more particularly, to a pouch-type cell in which a full width of a pouch cell is evenly maintained from an upper end to a lower end by completely fixing the sealing part of the pouch cell through molding using infrared heating, even without the use of tape, and a method for molding a sealing part thereof.

### [Background Art]

With explosive increase in technological development and demand for mobile devices and automobiles, more research is being conducted on a secondary battery with high energy density and discharge voltage and excellent output stability. Examples of such a secondary battery include a lithium secondary battery such as a lithium-sulfur battery, a lithium ion battery, and a lithium ion polymer battery. In addition, the secondary battery as described above can be classified into a cylindrical-type, a rectangular-type, a pouch-type and the like, depending on the shape thereof, and interest in and demand for pouch-type battery cells are gradually increased. The pouch-type battery cells can be stacked with a high degree of integration, have a high energy density per unit weight, are inexpensive, and are easily deformable. Therefore, the pouch-type battery cell can be manufactured in shapes and sizes applicable to various mobile devices and automobiles.

The normal pouch-type battery cells have a sealed structure in which an electrode assembly including an anode, a cathode, and a separation membrane is stacked and housed in a flexible battery case (i.e., a stack-type electrode assembly or a stack/folding-type electrode assembly is housed in the battery case), and the end of the battery case is sealed by heat sealing or the like. A flexible packaging material sheet that constitutes the battery case is made up of one or more of a resin layer and a metal layer, and a sealing part is formed at the end of the flexible packaging material sheet, thereby serving to prevent the electrode assembly from coming off to the outside and also protect it against external impacts. The sealing part of the battery case is formed in a shape protruding to the side surface of the battery cell.

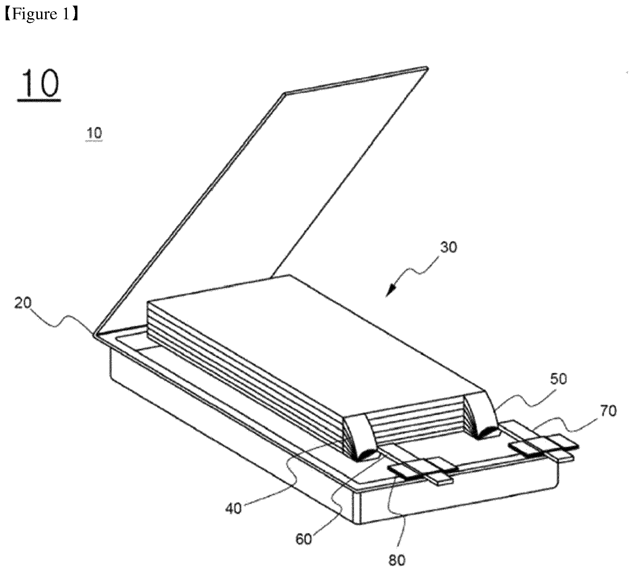

FIG. 1 is an exploded perspective view of a normal pouch-type battery cell. Referring to FIG. 1, a normal pouch-type battery cell 10 includes an electrode assembly 30, electrode tabs 40 and 50 extending from the electrode assembly 30, electrode leads 60 and 70 welded to the electrode tabs 40 and 50, and a battery case 20 that houses the electrode assembly 30. The electrode assembly 30 has a stack-type or stack/folding-type structure, in which an anode and a cathode are sequentially stacked with a separation membrane interposed therebetween. The electrode tabs 40 and 50 extend from each plate of the electrode assembly 30, the electrode leads 60 and 70 are each electrically connected to a plurality of electrode tabs 40 and 50 extending from each plate, a part of which is exposed to the outside of the battery case 20. In addition, an insulating film 80 can be attached to a part of the upper and lower surfaces of the electrode leads 60 and 70 to increase the degree of sealing with the battery case 20 and ensure the electrical insulation state at the same time. The battery case 20 is generally made of a laminated sheet including resin, metal or a mixture thereof, provides a space capable of housing electrode assembly 30, and has a pouch shape as a whole. In the case of the stack-type electrode assembly 30 as shown in FIG. 1, the inner upper end of the battery case 20 can be spaced apart from the electrode assembly 30 so that the plurality of anode tabs 40 and the plurality of cathode tabs 50 can be coupled together to the electrode leads 60 and 70.

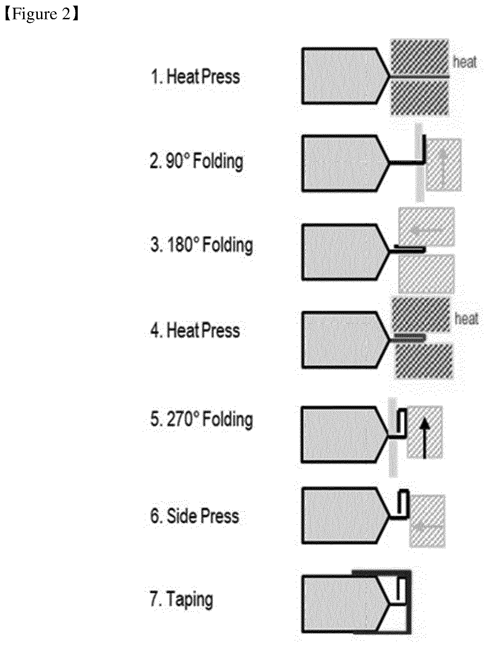

Such a pouch-type battery cell undergoes a process of housing the electrode assembly in the battery case, injecting an electrolytic solution, and then sealing it by heat sealing or the like, and finally undergoes a process of vertically bending either outer peripheral surfaces or heat sealing part (sealing part) of the battery cell. FIG. 2 is a schematic view of vertically bending and fixing the sealing part of a normal pouch-type battery cell. Conventionally, a process as shown in FIG. 2 was performed to vertically bend and fix the sealing part of the pouch-type battery cell.

Specifically, conventionally, the sealing part of the battery cell was made to be adjacent to the electrode assembly housing part as much as possible, via a process in which 1) the sealing part is thermally compressed by a heat press (if necessary, the sealing part is cut to an appropriate length and then thermally compressed), 2) a tip of the sealing part thermally compressed is bent by 90 degrees (°), using a separate raising block and support, 3) the tip of the sealing part bent by 90 degrees is bent again by 90 degrees in a direction of the electrode assembly housing part using a separate block to fold the sealing part (bending by a total 180 degrees including the preceding bending by 90 degrees), 4) the folded sealing part is thermally compressed by a heat press, 5) the support is positioned vertically at each of upper and lower ends between the folded sealing part and the electrode assembly housing part, then a separate block is positioned to face the outer surface of the lower support on the basis of the electrode assembly housing part, and the block is raised toward the upper support to bend the tip of the folded sealing part by 90 degrees (bending by a total 270 degrees including the preceding bending by 180 degrees), 6) the tip of the folded sealing part bent by 90 degrees is side pressed by separate block, and finally 7) the tip of the folded sealing part bent by 90 degrees is fixed with a tape.

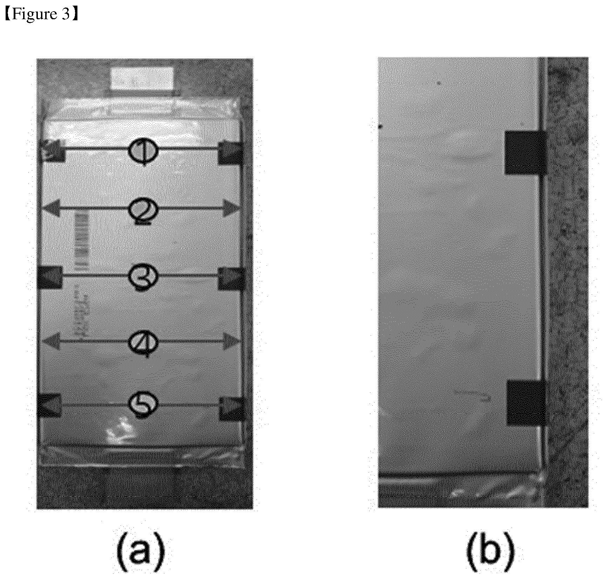

FIG. 3 is a schematic diagram in which a sealing part of the normal pouch-type battery cell is fixed with a tape. However, when the sealing part is fixed with tape as shown in FIG. 3, a full width difference inevitably occurs between a tape sticking part (1, 3 and 5 of FIG. 3) and a non-tape sticking part (2 and 4 of FIG. 3).

**[table 1]**

| | Full width for each position |
|---|---|
| No. 1 cell position | 0.5 mm |
| No. 2 cell position | 1.5 mm |
| No. 3 cell position | 0.6 mm |
| No. 4 cell position | 1.9 mm |
| No. 5 cell position | 1.0 mm |

When a full width difference occurs (In the above case, a difference of up to 1.4 mm occurs in the full width of the cell.) and the full width process control is not achieved, an error in the full width is large when assembling the module, the cells do not enter the module, and because some cells eventually need to be performed manually, a process loss occurs inevitably. Therefore, there is a need for a technology that can fundamentally solve the problem when bending the sealing part in the pouch-type cell (that is, the process loss caused by the difference in the full width of the pouch cell).

### [Disclosure]

### [Technical Problem]

Accordingly, an object of the present invention is to provide a pouch-type cell in which a full width of a pouch cell is evenly maintained from an upper end to a lower end by completely fixing the sealing part of the pouch cell through molding using infrared heating, even without the use of tape, and a method for molding a sealing part thereof.

### [Technical Solution]

In order to achieve the above object, the present invention provides a pouch-type cell which includes an electrode assembly housing part; and sealing parts positioned at both side ends of the electrode assembly housing part and protruding in an outward direction, in which the sealing parts include a portion overlapped by folding a tip, and the overlapped portions of the sealing parts form a constant angle in a range of is 80 to 90 degrees with a sealing part portion except the overlapped portion without the help of an external force.

Further, the present invention includes a method for molding a sealing part of a pouch-type cell, the method including: (a) a step of folding and overlapping tips of sealing parts, which are positioned on each of both side ends of an electrode assembly housing part and protrude in an outward direction, toward the electrode assembly housing part; (b) a step of thermally pressing the overlapped sealing parts; (c) a step of positioning an upper support and a lower support to face each other in a direction perpendicular to upper and lower end surfaces of the sealing parts between the overlapped sealing parts and the electrode assembly housing part; and (d) a step of positioning a block to face the outer surface of the lower support base on the basis of the electrode assembly housing part, and raising the block toward the upper support base to bend the tips of the overlapped sealing parts toward the electrode assembly housing part, in which while or after any one or more of steps (a), (b) and (d) are performed, the overlapped portion or bent portion is heated with infrared rays.

### [Advantageous Effects]

In the pouch-type cell and the method for forming the sealing part thereof according to the present invention, by completely fixing the sealing part of the pouch cell molding using infrared heating, even without using a tape, the full width of the pouch cell is uniformly maintained from the upper end to the lower end, and can be easily managed within a specific dimensional range. As a result, manual production loss that occurs during module assembly can be reduced, unlike the conventional process in which the sealing part is incompletely fixed using the tape. In addition, since no tape is used unlike the conventional method, there are also advantages that the manufacturing cost can be reduced, and the full width process capability (that is, dispersion) is excellent.

### [Description of Drawings]

FIG. 1 is an exploded perspective view of a normal pouch-type battery cell.
FIG. 2 is a schematic view in which the sealing part of a normal pouch-type battery cell is bent and fixed vertically.
FIG. 3 is a schematic diagram in which a sealing part is fixed with a tape in the normal pouch-type battery cell.
FIG. 4 is a perspective view of a pouch-type cell according to the invention.
FIG. 5 is a side cross-sectional view of the pouch-type cell according to the invention.
FIG. 6 is a process flow chart sequentially showing an aspect in which the sealing part of the pouch-type cell according to an embodiment of the present invention is molded.
FIG. 7 is a process flow chart sequentially showing an aspect in which a sealing part of a pouch-type cell according to another embodiment of the present invention is molded.

### [Best Mode]

The present invention will be described in detail below with reference to the accompanying drawings.

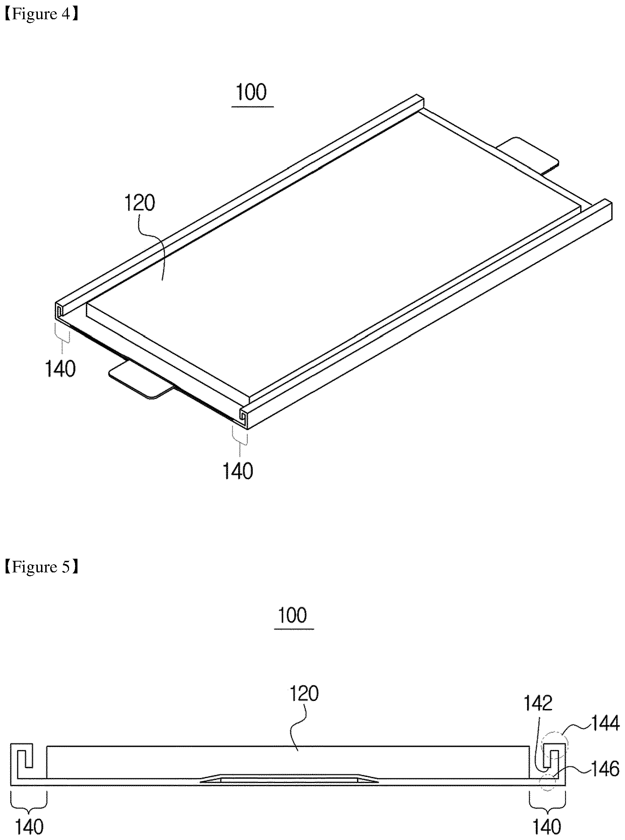

FIG. 4 is a perspective view of a pouch-type cell according to the invention, and FIG. 5 is a side cross-sectional view of the pouch-type cell according to the invention. As shown in FIGS. 4 and 5, a pouch-type cell 100 according to the present invention includes an electrode assembly housing part 120, and sealing parts 140 which are each positioned at both side ends of the electrode assembly housing part 120 and protrude outward. The sealing parts 140 include a portion 144 overlapped by folding up a tip 142, and the overlapped portion 144 of the sealing part 140 forms a constant angle with a portion 146 of the sealing portion except the overlapped portion 144 without the aid of an external force in the range of 80 to 90 degrees.

In order to install the pouch-type battery cell in a standardized module, it is necessary to vertically fold and fix the sealing part (or wing, a pouch area sealed on both sides of the cell) of the pouch-type battery cell to be positioned adjacent to the electrode assembly housing side as much as possible. This is because the full width of the pouch-type battery cell needs to be uniformly maintained from an upper end to a lower end so that it can be installed in the module without additional manual work.

In this regard, conventionally, in order to bend and fix the sealing part of the pouch-type battery cell vertically, a method of fixing the bent sealing part of the pouch-type battery cell with a tape was used as shown in FIGS. 2 and 3. However, when the tape is used in this manner, a difference in full width occurs between the tape sticking part and the non-tape sticking part. If the full width difference occurs in this way and the full width process is not controlled, the error in the full width is large during module assembly, the cells do not enter the module, and since some cells eventually performed manually, a process loss occurs inevitably In order to solve such a problem, although a method of attaching the tape to the entire sealing part may also be considered, in this case, compared to a case where the tape is attached sparsely, not only the material cost of the tape increases, but also the process time increases, which inevitably causes a problem in which a daily production of the battery decreases.

Therefore, the applicant of the present application invents a technique for holding and fixing the full width of the pouch-type battery cell uniformly from the upper end to the lower end, by performing second folding in a DSF (Double sided folding) process, that is, the process of folding the sealing part twice as a cell manufacturing finishing process, reducing and fixing the full width through "hot forming method using infrared heating.

That is, the present invention relates to a pouch-type cell in which the sealing part of the pouch cell is completely fixed through a hot forming method using infrared heating, and the full width of the pouch cell is kept uniformly from the upper end to the lower end, and has an advantage that it can be provided in the module at once without separate subsequent manual work.

The end of the electrode assembly housing part 120 has a sealing structure having a sealing part 140 that is sealed by heat sealing or the like. A flexible packaging material sheet forming the electrode assembly housing part 120 includes a resin layer and a metal layer, and also serves to not only prevent the electrode assembly from being detached from the outside, but also protect the electrode assembly from external impact, by forming the sealing part 140 at the end thereof. Therefore, the sealing part 140 is formed in a protruding shape on the side surface of the battery cell (or the pouch-type cell 100), and is made of the same material as that of the electrode assembly housing part 120. The resin layer (or adhesive layer) forming the electrode assembly housing part 120 and the sealing part 140 may include, but is not limited to, polypropylene (PP), and aluminum.

The electrode assembly housing part 120 is a place which houses an electrode assembly including at least one unit cell including an anode, a cathode, and a separation membrane interposed therebetween. The configuration of the electrode assembly is not particularly limited, for example, a half cell may be positioned on the top and bottom of the electrode assembly, and the general electrode assembly structure may be followed. Also, the electrode assembly may be of a stack-type or a stack/folding-type. Also, as shown in FIG. 4, the anode tab and the cathode tab may be positioned in directions opposite to each other. However, as shown in FIG. 1, the anode tab and the cathode tab may be positioned together on only one side, and the position can be set in various ways according to the type of battery, purpose or the like.

The sealing part 140 includes a portion 144 in which a tip 142 is folded inward and overlapped. This is a form obtained by the first folding during the DSF (Double sided folding) process, and is a structural feature for maximally strengthening the fixing force. In addition, through second folding during the DSF process, the overlapped portion 144 of the sealing part 140 and the non-overlapped portion 146 of the remaining sealing part 140 form a certain angle without the help of external force.

The present invention has a particularly important feature in this regard. The overlapped portion 144 of the sealing part 140 and the non-overlapped portion 146 of the remaining sealing part 140, (i.e., a portion of the sealing part except the overlapped portion) form a constant angle without the help of external force such as tape fixation, and the entire sealing part 140 which extends from the upper end to the lower end of both side surface portions of the pouch cell has such a form. That is to say, the longitudinal full width of the electrode assembly housing part 120 and the sealing parts 140 positioned at both side ends of the electrode assembly housing part 120 is uniform from the upper end (or one end portion) to the lower end (or the other end portion). At this time, a ratio of the shortest width to the longest width may be 95 to 100, preferably 97 to 100, more preferably 99 to 100, in the full width including the electrode assembly housing part 120 and the sealing part 140.

In addition, an included angle (internal angle) between the overlapped portion 144 of the sealing part 140 and the non-overlapped portion 146 of the remaining sealing part 140 is within the range of 80 to 90 degrees. However, when precisely bending at the time of manufacturing as 90 degrees, it may be in the range of 85 to 90 degrees, more preferably 87 to 90 degrees.

The overlapped portion 144 of the sealing part 140 has a bending force of 200 to 250 g/lcm at room temperature. There is also an advantage that the bending force is improved by about 2 to 2.5 times compared to a case of bending the overlapped portion 144 of the sealing part 140 by a heating method using a general heat source (about 80 to 100 g/lcm) other than an infrared heating method. This is related to the material (PP, PET) of the resin layer forming the electrode assembly housing part 120 and the sealing part 140. It is attributed to an increase in the degree of hardening of the resin layer in the infrared heating method, compared to the general heating method.

On the other hand, the length of the overlapped portion 144 of the sealing part 140 and the length of the non-overlapped portion 146 of the remaining sealing part 140 are not particularly limited, and it is revealed that the lengths can be variable according to the size and shape of the module having the pouch cells therein.

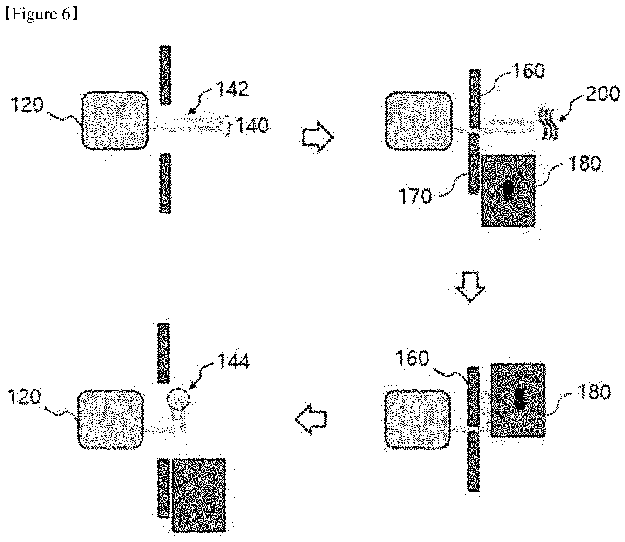

Next, a method for molding the sealing part of the pouch-type cell according to the present invention will be described. FIG. 6 is a process flow chart sequentially showing an aspect in which the sealing part of the pouch-type cell according to an embodiment of the present invention is molded. The method for molding the sealing part of the pouch-type cell will be described referring to FIG. 6. The method for molding the sealing part of the pouch-type cell according to the present invention includes: (a) a step of folding and overlapping tips 142 of the sealing parts 140, which are positioned on each of both side ends of the electrode assembly housing part 120 and protrude in an outward direction, toward the electrode assembly housing part 120; (b) a step of thermally pressing the overlapped sealing part 140; (c) a step of positioning the upper support 160 and the lower support 170 to face each other in the direction perpendicular to the upper and lower end surfaces of the sealing part between the overlapped sealing part 140 and the electrode assembly housing part 120; and (d) a step of positioning the block 180 to face the outer surface of the lower support base 170 on the basis of the electrode assembly housing part 120, and raising the block 180 toward the upper support base 160 to bend the tip 144 of the overlapped sealing part 140 toward the electrode assembly housing part 120, and during or after any one or more of steps (a), (b) and (d) are performed, the overlapped portion or bent portion is heated with infrared rays.

First, the step (a) is a step of folding and overlapping the tips 142 of the sealing parts 140, which are positioned on each of both side ends of the electrode assembly housing part 120 and protrude in the outward direction, toward the electrode assembly housing part 120. (i.e., the first folding). This is a preceding process for the second folding (or second bending) of step (d), and may overlap the tip 142 of the sealing part 140 so as to be positioned at one end of the remaining unfolded sealing part 140 within a range that does not affect the second folding. However, it may be desirable to overlap the tip 142 of the sealing part 140 so as to be located at about a halfway position of the remaining unfolded sealing part 140 in consideration of the second folding.

On the other hand, before performing the above step (a), if necessary, as in FIGS. 1 and 2, it is possible to additionally perform any one or more of steps of thermally pressing the sealing parts of a non-bent state by a heat press, and bending the tip of thermally pressed sealing part by about 90 degrees using a rising block and a support. In particular, if the step of bending the tip of the unfolded sealing part by about 90 degrees is performed before performing the step (a), the sealing part 140 can be overlapped by being folded toward the electrode assembly housing part 120 by only about 90 degrees in the step (a).

Next, the step (b) is a step of thermally pressing the overlapped sealing part 140 (not shown in FIG. 6), and it is preferable to thermally compress the entire sealing part 140 in consideration of the second folding. At this time, the means for thermally pressing the overlapped sealing part 140 is not limited, and a heat source may be built in each of the upper and lower parts of the overlapped sealing part 140 or a self-heated heat block may be provided to simultaneously thermally press the upper and lower parts of the overlapped sealing part 140. However, it may be desirable to use a heat block with a built-in heat source to increase a heat transfer efficiency.

On the other hand, the temperature applied to the sealing part 140 overlapped through the thermally pressing in the step (b) may be 160 to 220°C, preferably 180 to 200°C. If the temperature applied to the overlapped sealing part 140 through the thermally pressing is less than 160°C, subsequent folding may not be smooth. If the temperature exceeds 220°C, there is a risk that a PET layer or a nylon layer positioned on the outermost side of the sealing part may be peeled and the insulation resistance characteristics may deteriorate due to the hardening of the sealing layer. Further, thermally pressing time can be 0.1 to 2 seconds, preferably 0.5 to 1.5 seconds, more preferably about 0.6 seconds. This is advantaged in terms of Tack balance, and it is possible to prevent peeling and hardening phenomena due to excessive thermal which are side effects of IR heating.

Next, then step (c) is a step of positioning the upper support 160 at the upper end and the lower support 170 at the lower end in a direction perpendicular to the upper and lower end surfaces of the sealing part between the overlapped sealing part 140 and the electrode assembly housing part 120. This is for the purpose of allowing the block 180 to rise and fall stably in step (d) to be described later, and the tip 144 of the overlapped sealing part 140 to be crimped with maximum force, in particular when the block 180 rises.

Further, as shown in FIG. 6, the upper support 160 may have a straight shape like the lower support 170. However, the tip 144 of the overlapped sealing part 140 may have a constant angled (i.e., the upper support 160 may have an inclined portion that is inclined upward from the lower end toward the electrode assembly housing part 120) so as to be bent toward the electrode assembly housing part 120 as much as possible (in view of a spring back phenomenon of the tip). In this case, the interior angle of the upper support 160 (that is, the outward direction based on the electrode assembly housing part 120) may be 90 to 150 degrees.

Meanwhile, the upper support 160 and the lower support 170 are preferably made of a material having excellent thermal resistance and strength. This is because, in step (d), the block 180 not only comes into contact with the upper support 160 and the lower support 170, but is side-pressed toward the electrode assembly housing part 120 or the supports 160 and 170 with the rise of the block 180. Accordingly, the upper support 160 and the lower support 170 may be made of stainless steel having excellent thermal resistance and strength, heat-resistant ceramic, or heat-resistant polymer.

The step (d) is a step of positioning the block 180 to face the outer surface of the lower support 170 on the basis of the electrode assembly housing 120, and raising the block 180 toward the upper support 160 to bend the tip 144 of the overlapped sealing part 140 toward the electrode assembly housing part 120. The block 180 may include an internal heat source, be heated through an external heat source, or be non-heated.

The pressure applied to the overlapped sealing part 140 through the block 180 may be 0.2 to 0.7 MPa, preferably 0.2 to 0.5 MPa. If the pressure applied to the overlapped sealing part 140 is less than 0.2 MPa, since the force applied to the tip of the sealing part is small, there may be a problem that the sealing part is elastically recovered and the tip of the sealing part is unfolded (that is, an excessive spring back phenomenon). Moreover, if the pressure applied to the sealing part 140 exceeds 0.7 MPa, cracks may occur in the sealing layer of the sealing part, which may cause problems in insulation resistance and insulation voltage.

Also, the pressing time using block 180 may be 1 to 10 seconds, preferably 1 to 8 seconds. If the pressing time using the block 180 is less than 1 second, since it is difficult to secure the minimum process time for fixing the sealing part, there is a problem of difficulty in maintaining the desired shape. If thermally pressing time using the block 180 exceeds 10 seconds, it may be difficult to secure the process tack, and there is a problem of difficulty in securing the insulation resistance and thickness due to the excessive thermally pressing time.

On the other hand, as described above, the process of heating the overlapped portion or the bent portion with infrared rays, while or after any of the steps (a), (b), and (d) is performed. This is a process for increasing the flexibility of the sealing part 140 particularly at the time of the sealing part molding (that is, the second folding) performed in step (d) to improve the fixing force. In the case of a general sealing part heating method, since heat is concentrated only on the PET/nylon layer and the adhesive layer which are the surfaces of the pouch or sealing part, uniform heating and sealing of the PP layer is incomplete. However, according to the infrared heating as in the present invention, there is an advantage that the PP layer can be heated in a short time and then compressed.

The infrared heating may be near-infrared (N-IR) heating, mid-infrared (M-IR) heating or far-infrared (F-IR) heating, and among them, it may be desirable to use mid-infrared heating in that the PP layer of the pouch is heated in a short time, and it is possible to heat evenly to the interior of the pouch surface.

For example, the sealing part heating using the infrared rays may be performed variously during or immediately after the step (a), during or immediately after thermally pressing of the overlapped sealing part 140 (i.e., between step (b) and step (c)), the time point at which the sealing part is raised toward the upper support 160 from the time when the block 180 is positioned, and the tip 144 of the overlapped sealing part 140 is bent toward the electrode assembly housing part 120, or the like. However, the infrared heating 200 may be preferably performed before the tip 144 of the overlapped sealing part 140 is bent toward the electrode assembly housing part 120 as shown in FIG. 6. In other words, it may be desirable to perform the infrared heating 200 before raising the block 180 toward the upper support 160.

The infrared heating 200 can improve the fixing force of the bent sealing part, even by being performed in a very short period of time. That is, the time of infrared heating 200 can be 1 to 2 seconds, and it may be more preferable to heat as close to 1 second as possible. If the infrared heating time is less than 1 second, the flexibility of the sealing part due to the infrared heating may be insufficient, resulting in incomplete bending in step (d). Moreover, if the infrared heating time exceeds 2 seconds, peeling may occur on the surface of the sealing part due to an excessive heat source.

The temperature at the time of the infrared heating 200 can be set so that the PP layer of the sealing part becomes 140 to 170°C, preferably 150 to 160°C. (At this time, the temperature of the surface of the sealing part may become 160 to 220°C). When the PP layer temperature of the sealing part is less than 140°C even if the infrared heating is performed, the desired folding may not be achieved. In addition, when the temperature of the PP layer of the sealing part exceeds 170°C even if the infrared heating is performed, fluidity increases, and it may not be easy to secure a uniform sealing thickness and insulating properties.

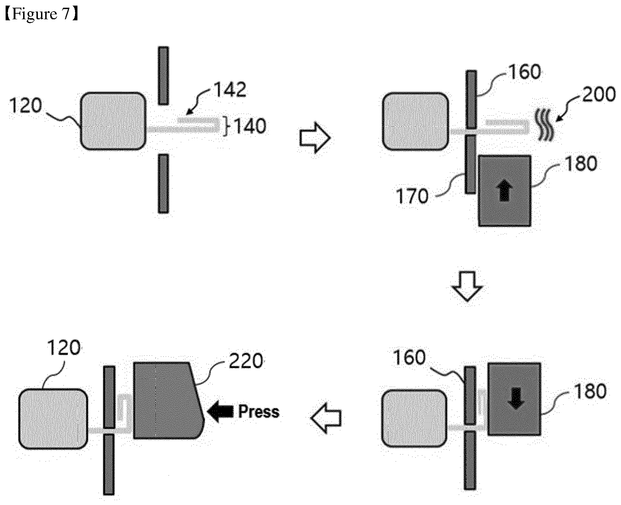

FIG. 7 is a process flow chart sequentially showing an aspect in which the sealing part of the pouch-type cell according to another embodiment of the present invention is molded. As shown in FIG. 7, in the method for molding the sealing part of the pouch-type cell according to the present invention, after the step (d) of raising the block 180 is toward the upper support 160 to bend the tip 144 of the overlapped sealing part 140 toward the electrode assembly housing part 120, if necessary, may further a step of applying a cooling block 220 to the outer surface on the basis of the electrode assembly housing part of the bent part to press and cool the outer surface.

The cooling block 220 is a means which can further improving the fixing force of the sealing part that is bent through the infrared heating, and may include an internal cooling source or be cooled through an external cooling source. The temperature of the cooling block 220 may be 10°C or less. If the temperature of the cooling block 220 exceeds 10°C, there may be no advantage when using the cooling block 220 because it is difficulty to expect the cooling performance.

In addition, the pressure applied to the overlapped sealing parts through the cooling block 220 may be 0.2 to 0.7 MPa, preferably 0.2 to 0.5 MPa. Also, the pressing time using the cooling block 220 may be 1 to 10 seconds, preferably 1 to 8 seconds. If the pressing time using the cooling block 220 is less than 1 second, there may be no advantage when using the cooling block 220, and if it exceeds 10 seconds, the insulation resistance characteristic may be degraded.

On the other hand, although only the sealing part positioned on one side of the pouch cell (that is, the main sealing part) was described through the above description and drawings, the sealing parts positioned on the other side may also be molded into the same shape through the same process. Although the pouch-type cell and the method for molding the sealing part according to the present invention have been described above with reference to specific examples, the present invention is not limited thereto, and it is clear that various modifications can be made within the scope and technical concept of the present invention. Furthermore, in order to facilitate a clear understanding of the present invention, the examples described above will be compared with comparative examples that deviate from the scope of the present invention.

### [Example 1] Manufacture of pouch-type cell with uniform full width

First, after preparing a pouch-type cell including an electrode assembly in which a plurality of unit cells including an anode, a cathode, and a separation membrane are stacked, sealing parts positioned at both side ends of the pouch-type cell were cut to an appropriate length. Then, the remaining sealing part was thermally pressed by a hot press, and the tip of thermally pressed sealing part was bent 90 degrees using a separate rising block and support. Subsequently, after the tip of the sealing part that was bent 90 degrees was bent toward the electrode assembly housing part and the sealing part was overlapped, the overlapped sealing part was thermally pressed. Subsequently, an upper support base and a lower support base were positioned at each of the upper and lower ends between the overlapped sealing part and the electrode assembly holding part. Subsequently, after positioning the block to face the outer surface of the lower support on the basis of the electrode assembly housing part, mid-infrared rays (M-IR, Philips company) were radiated to the sealing part at a temperature of 180°C for 1 second and heated. Finally, the block was raised toward the upper support base, the tip of the overlapped sealing part was bent toward the electrode assembly housing part, and the overlapped sealing part bent toward the electrode assembly housing part was fixed vertically on the basis of the side cross-section of the cell.

### [Example 2] Manufacture of pouch-type cell with uniform full width

The sealing part of the pouch-type cell was molded in the same manner as in Example 1 above, except that after making the cooling block cooled to 7°C face in the outward direction of the electrode assembly housing part on the basis of the sealing part bent vertically and fixed on the basis of the cell side cross-section, the sealing part was pressed toward the electrode assembly housing part for 3 seconds.

### [Comparative Example 1] Manufacture of pouch-type cell

The sealing part of the pouch-type cell was molded in the same manner as in Example 1, except that the sealing part was not be radiated with mid-infrared rays.

### [Comparative Example 2] Manufacture of pouch-type cell

The sealing part of the pouch-type cell was molded in the same manner as in Example 1, except that heat is provided to the sealing part for 1.5 seconds by a heating element with a common heat source at a temperature of 180°C, instead of radiating the sealing part with mid-infrared rays.

### [Test Example 1] Full width process capability (dispersion) evaluation

For each of the pouch-type cells in which the sealing part was molded in Examples 1 and 2 and Comparative Example 1, a total of 7 locations (on the basis of the normal pouch-type cell in which the sealing part is stuck with tape, seven locations including the taping part, the non-taping part and both ends of the cell in which the variation in the full width is large) were measured to evaluate the full width process capability (that is, dispersion) (total 5 cell measurements).

As a result of the evaluation, the pouch-type cell of Example 1, in which the sealing part was vertically bent by radiating infrared rays, had a full width standard deviation of about 0.40 mm, and the pouch-type cell of Example 2 additionally pressed by cooling block had simply the full width standard deviation of about 0.38 mm. On the other hand, the standard deviation of the full width of the pouch-type cell of Comparative Example 1, which did not use both the infrared rays and the cooling block, was about 0.83 mm, which is more than double the standard deviation of Examples 1 and 2. Therefore, since the pouch-type cells of Examples 1 and 2 above have dispersions that are closer to an average value than the pouch-type cell of Comparative Example 1, it can be understood that the former has an excellent full width quality, a lower defect occurrence rate, and a simple management, and thus is superior in terms of process capability.

### [Test Example 2] Bending force evaluation of sealing part

For each of the pouch-type cells manufactured in Example 1 and Comparative Example 2, the bending force of the overlapped portion of the sealing part was measured. A UTM (model name: HD-B609B-S) was used for the measurement, and the degree of bending was observed by applying the same external force to the overlapped portion in the sealing part at room temperature.

As a result of measuring the bending force of the overlapped portion in the sealing part of each pouch-type cell as described above, the pouch-type cell of Example 1 in which the sealing part was bent by radiating infrared rays was found that the overlapped portion of the sealing part exhibited bending force of about 232 g/lcm. On the other hand, in the pouch-type cell of Comparative Example 2, in which the sealing part was bent by a heating element equipped with a general heat source, the overlapped portion of the sealing part showed a bending force of about 93 g/lcm at, and it was easily bent even with a weak force and was not easy to keep verticality.

### [Description of Symbol]

100: Pouch-type cell
120: Electrode assembly housing part
140: Sealing part
160: Upper support
170: Lower support
180: Block
200: Infrared heating
220 Cooling block

## Claims

1. A pouch-type cell, comprising:
an electrode assembly housing part; and
sealing parts positioned at both side ends of the electrode assembly housing part and protruding in an outward direction,
wherein the sealing parts include a portion overlapped by folding a tip, and the overlapped portions of the sealing parts form a constant angle in a range of is 80 to 90 degrees with a sealing part portion except the overlapped portion without the help of an external force.

2. The pouch-type cell according to claim 1,
wherein a longitudinal full width including the electrode assembly housing part and the sealing parts disposed on both side ends of the electrode assembly housing part is uniform from one end to the other end.

3. The pouch-type cell according to claim 1,
wherein the overlapped portions of the sealing parts form a constant angle in the range of 85 to 90 degrees with a sealing part portion except the overlapped portion without the help of an external force.

4. The pouch-type cell according to claim 1,
wherein the overlapped portion of the sealing part has a bending force of 200 to 250 g/lcm at room temperature.

5. The pouch-type cell according to claim 1,
wherein the electrode assembly housing part and the sealing part are made of a flexible sheet including a resin layer and a metal layer.

6. The pouch-type cell according to claim 5,
wherein the resin layer comprises polypropylene and the metal layer comprises aluminum.

7. A method for molding a sealing part of a pouch-type cell, the method comprising:
(a) a step of folding and overlapping tips of sealing parts, which are positioned on each of both side ends of an electrode assembly housing part and protrude in an outward direction, toward the electrode assembly housing part;
(b) a step of thermally pressing the overlapped sealing parts;
(c) a step of positioning an upper support and a lower support to face each other in a direction perpendicular to upper and lower end surfaces of the sealing parts between the overlapped sealing parts and the electrode assembly housing part; and
(d) a step of positioning a block to face the outer surface of the lower support base on the basis of the electrode assembly housing part, and raising the block toward the upper support base to bend the tips of the overlapped sealing parts toward the electrode assembly housing part,
wherein while or after any one or more of steps (a), (b) and (d) are performed, the overlapped portion or bent portion is heated with infrared rays.

8. The method for molding the sealing part of the pouch-type cell according to claim 7,
wherein the infrared heating is selected from a group consisting of near infrared (N-IR) heating, mid infrared (M-IR) heating and far infrared (F-IR) heating.

9. The method for molding the sealing part of the pouch-type cell according to claim 7,
wherein the infrared heating is mid-infrared heating.

10. The method for molding the sealing part of the pouch-type cell according to claim 7,
wherein the infrared heating of the step (d) is performed before the block is raised toward the upper support.

11. The method for molding the sealing part of the pouch-type cell according to claim 7,
wherein the infrared heating is performed for 1 to 2 seconds.

12. The method for molding the sealing part of the pouch-type cell according to claim 7,
wherein after the tips of the overlapped sealing parts of the step (d) are bent toward the electrode assembly housing part, the overlapped portions of the sealing part form a constant angle in the range of 80 to 90 degrees with the non-overlapped portion of the remaining sealing part without the help of external force.

13. The method for molding the sealing part of the pouch-type cell according to claim 7, further comprising:
a step of applying a cooling block to an outer surface on the basis of the electrode assembly housing part of the bent portion to press and cool the outer surface, after the step (d).

14. The method for molding the sealing part of the pouch-type cell according to claim 13,
wherein the cooling block presses the outer surface of the bent portion at a temperature of 10°C or less and a pressure of 0.2 to 0.7 MPa for 1 to 10 seconds.
